# EUROPÄISCHE PATENTSCHRIFT

(11) **EP 2 251 181 B1**
(45) Veröffentlichungstag und Bekanntmachung des Hinweises auf die Patenterteilung: **02.05.2012**
(21) Anmeldenummer: 09006507.9
(22) Anmeldetag: 14.05.2009
(51) Int. Cl.: B29C 51/44

(54) **Vorrichtung zum Stapeln von Fertigartikeln aus thermoplastischem Kunststoff**
Device for stacking ready-made, thermoplastic articles
Dispositif d'empilage d'articles préfabriqués en matière thermoplastique

(43) Veröffentlichungstag der Anmeldung: 17.11.2010
(73) Patentinhaber: Gabler Thermoform GmbH & Co. KG, 23568 Lübeck (DE)
(72) Erfinder: Rowedder, Axel, 23623 Ahrensbök (DE)
(74) Vertreter: Grosse, Wolf-Dietrich Rüdiger

(56) Entgegenhaltungen:
- EP-A1- 1 232 970
- EP-A1- 1 800 836
- DE-A1-102004 050 917
- US-A- 6 135 756

## Beschreibung

Die Erfindung betrifft eine Vorrichtung zum Stapeln von aus einem Mehrfachwerkzeug einer Thermoformmaschine ausgeschobenen Fertigartikeln aus thermoplastischem Kunststoff, umfassend eine Schwenk-Fangvorrichtung mit der Anzahl der hergestellten Fertigartikel entsprechenden, nur auf einer Seite einer Platte angeordneten Aufnahmen zur Übernahme der ausgeschobenen Fertigartikel und deren Abtransport zu einer der Thermoformmaschine nachgeschalteten Stapelstation, wobei die Schwenk-Fangvorrichtung zwischen dem Mehrfachwerkzeug und der Stapelstation verfahrbar und um eine in einer die Platte mit den Aufnahmen tragenden Formatplattenaufnahme vorgesehene Drehachse schwenkbar ist, wie aus der EP 1 800 836 A 1 bekannt.

Bei einer durch die DE 10 2005 035 459 B4 bekannt gewordenen Stapelvorrichtung erfolgt das Schwenken mittels Zwangsführung in Kurvennuten. Die Fertigartikel werden mittels der Aufnahmen, diese können über die Schwenk-Fangvorrichtung an Vakuum anschließbare Saugkonen oder an den Fertigartikel, insbesondere an den Artikelrand, angepasste, formschlüssige Haltemittel sein, vom Mehrfachwerkzeug übernommen. Während des Verfahrens wird mittels eines Antriebes die Schwenk-Fangvorrichtung mit den aufgenommenen Fertigartikein um eine Drehachse um 180° verschwenkt.

Unter einer Schwenk-Fangvorrichtung wird üblich ein aus einer Formatplatte und einer Formatplattenaufnahme bestehendes Komplettsystem verstanden. Hierbei stellt die Formatplatte ein produktspezifisches, unterschiedlich bezüglich Konusform, Konuslänge, Konusanzahl und Formlänge ausgebildetes Bauteil dar. Hingegen handelt es sich bei der Formatplattenaufnahme, an der die produktspezifische Formatplatte befestigt wird, um ein zur Thermoformmaschine gehöriges Standard-Bauteil.

Eine der Stapel- und Zählvorrichtung vorgeschaltete Thermoformmaschine ist aus der EP 1 570 972 B1 bekannt, dort aber mit einer anderen Stapelvorrichtung. Es übernimmt eine Fangplatte die im Werkzeug hergestellten Fertigartikel und führt diese einem ortsfesten Zwischenpuffer zu. In diesem wird eine Anzahl von Artikelstapeln angesammelt und dann intermittierend vom Zwischenpuffer in einen Stapelkorb verbracht. Die Fertigartikel werden hier jeweils mit der Öffnung voran von der Fangplatte aufgenommen und in den Zwischenpuffer übergeben.

Bei der bekannten, gattungsgemäßen Stapelvorrichtung werden die Fertigartikel hingegen von den Aufnahmen bzw. Saugkonen in der Öffnung erfasst, so dass sich insbesondere für dünnwandige und somit sensible Fertigartikel eine sichere Übernahme bietet. Zudem kann auf Halteelemente, welche auf die Dynamik der Fangvorrichtung abgestimmt werden müssen, verzichtet werden. Als besonders nachteilig ist dabei allerdings die neben der linearen Verfahrachse notwendige zusätzliche Drehachse, die während eines jeden Zyklus die Aufnahmeplatte zweimal um 180° schwenkt.

Da die moderne Verfahrens- und Maschinentechnik immer kürzere Zykluszeiten und somit größere Ausstoßleistungen anstrebt und ermöglicht, ist in Bezug auf immer größer werdende Maschinen (vgl. z. B. EP 1 000 887 B1), d.h. größere Massen und größere Trägheiten, die minimal mögliche Schwenkzeit begrenzt. Diese Schwenkzeit ist in erster Linie bestimmend für die Taktzahl. Um diesem Nachteil zu begegnen, werden leistungsstark dimensionierte Drehantriebe eingesetzt, um die großen Massen und Massenträgheitsmomente der Drehachse schnell schwenken zu können. Diese leistungsstarken, großen Antriebe erhöhen jedoch das Gewicht der Linearachse, was wiederum deren Standzeit reduziert. Außerdem leiten die großen Antriebe zwangsläufig erhöhte Antriebsmomente in die Drehachse ein, wodurch der Antriebsstrang entsprechend steifer und somit schwerer ausgelegt werden muß.

In der Praxis kommt daher, um die Schwenkzeiten möglichst klein zu halten, eine extreme Leichtbauweise der zu schwenkenden Teile zum Einsatz (vgl. die eingangs genannte DE 10 2005 035 459 B4). Die Leichtbau-Komponenten bieten nur geringe Sicherheiten und die Gefahr der Zerstörung bei Fehlfunktionen ist groß. Eine beispielsweise als Kunststoff-Waben-Platte ausgeführte Formatplatte hat nur eine geringe Tragfähigkeit, so dass sie bei Stapelproblemen mitunter völlig zerstört wird. Die Fälle sind nicht selten, die in einem Jahr den Austausch bzw. Ersatz mehrerer solcher Platten erforderlich machen. Damit sich die geringen Schwenk- und damit Zyklus- bzw. Taktzeiten gewährleisten lassen, wird dieser Kreislauf als unvermeidlich in Kauf genommen.

Der Erfindung liegt daher die Aufgabe zugrunde, eine gattungsgemäße Stapelvorrichtung ohne die genannten Nachteile zu schaffen, insbesondere bei verbesserter Haltbarkeit der Bauteile höhere Winkelgeschleunigungen und somit kürzere Schwenkzeiten mit größerer Ausstoßleistung zu ermöglichen.

Diese Aufgabe wird erfindungsgemäß dadurch gelöst, dass die Drehachse auf der die Aufnahmen aufweisenden Seite der Schwenk-Fangvorrichtung und weitestgehend mit deren die Aufnahmen einbeziehenden Hauptträgheitsachse zusammenfallend ausgebildet ist. Es wird hierdurch die Massenträgheit, die durch das Gewicht (linearer Einfluss), die Formflächenlänge (quadratischer Einfluss) und den Abstand der Drehachse zur Hauptträgheitsachse (Schwerpunkt; Steinersche Satz: Jges = J + (m x I²) bestimmt wird, auf ein Minimum reduziert.

Bei gleichen Werkzeuggrößen beträgt die Trägheit der bekannten Systeme bzw. Stapelvorrichtungen ca. 40% mehr als bei der Erfindung, die nämlich einen Abstand der Hauptträgheitsachse der Schwenk-Fangvorrichtung zur bzw. von der Drehachse vermeidet. Ein solcher Abstand vergrößert die Trägheit der auf der Drehachse verbauten Teile um den Anteil Masse x Hebelarm² (m x I²). Die Erfindung ermöglicht demgegenüber bei gleichen Antriebselementen und damit gleichen Bauteilbelastungen höhere Winkelbeschleunigungen und damit einhergehend kürzere Schwenkzeiten sowie größere Ausstoßleistungen.

Eine bevorzugte Ausführung der Erfindung sieht vor, dass die Schwenk-Fangvorrichtung mit einer Formatplatte ausgebildet ist, die aus einer produktspezifisch bemessenen Platte und auf dieser als Aufnahmen angeordneten Konusstangen mit Saugkonen für entweder hohe oder flache Fertigartikel besteht, wobei die Hauptträgheitsachse und damit die Drehachse in Richtung der Artikelabnahmeseite gesehen vor einer Anschraubebene der an einer Formatplattenaufnahme der Schwenk-Fangvorrichtung befestigten Formatplatte liegt. Die Formatplatten sind in der Regel für die maximale Ziehtiefe der Maschine ausgelegt. Hierdurch ist die Höhe der Saugkonus-/Konusstangenkombination immer gleich. Somit lassen sich standardisierte Verfahrwege und kurze Formatwechselzeiten realisieren. Die Hauptträgheitsachse liegt in jedem Fall vor der Anschraubebene der Formatplatte.

Ein vorteilhafter Vorschlag der Erfindung sieht vor, dass zumindest die Formatplatte einschließlich der Aufnahmen der Schwenk-Fangvorrichtung komplett aus Aluminium hergestellt ist. Die Aluminiumbauweise erfüllt die Anforderungen an Solidität und Haltbarkeit.

Weitere Merkmale und Einzelheiten der Erfindung ergeben sich aus den Ansprüchen und der nachfolgenden Beschreibung eines in den Zeichnungen dargestellten Ausführungsbeispiels der Erfindung. Es zeigen:
- Fig. 1: als Einzelheit einer Stapelvorrichtung einer Thermoformmaschine in einer perspektivischen Gesamtansicht eine um eine Drehachse nach dem Stand der Technik verschwenkbare Schwenk-Fangvorrichtung mit Aufnahmen in Form von Saugkonen;
- Fig. 2: in einer vereinfachten Vorderansicht eine solche zum Stand der Technik zählende Schwenk-Fangvorrichtung mit Darstellung von Aufnahmen bzw. Saugkonen für hohe Fertigartikel (rechter Saugkonus) bzw. für flache Fer- tigartikel (linker Saugkonus);
- Fig. 3: in einer perspektivischen Gesamtansicht eine erfindungsgemäße Schwenk- Fangvorrichtung mit trägheitsoptimierter Drehachse;
- Fig. 4: eine vereinfachte Vorderansicht einer solchen erfindungsgemäßen Schwenk-Fangvorrichtung mit wie in Fig. 2 als Aufnahmen alternativ darge- stellten Saugkonen, wobei nur die die Formlänge begrenzenden, äußeren Aufnahmen/Saugkonen gezeigt sind;
- Fig. 5: für eine kleine Maschine mit kleinerer Formlängelkleinerem Massenträg- heitsmoment eine Schwenk-Fangvorrichtung in vereinfachter Darstellung wie gemäß Fig. 4, demgegenüber aber mit lediglich schematisch angedeu- teter Befestigung einer Formatplatte an einer Formatplattenaufnahme, und wiederum alternativ dargestellten Saugkonen als Formatteile der Format- platte; und
- Fig. 6: eine Darstellung wie in Fig. 5, demgegenüber mit einem größeren Massen- trägheitsmoment für eine Staplervorrichtung einer leistungsstärkeren Ther- moformmaschine mit größerer Formlänge.

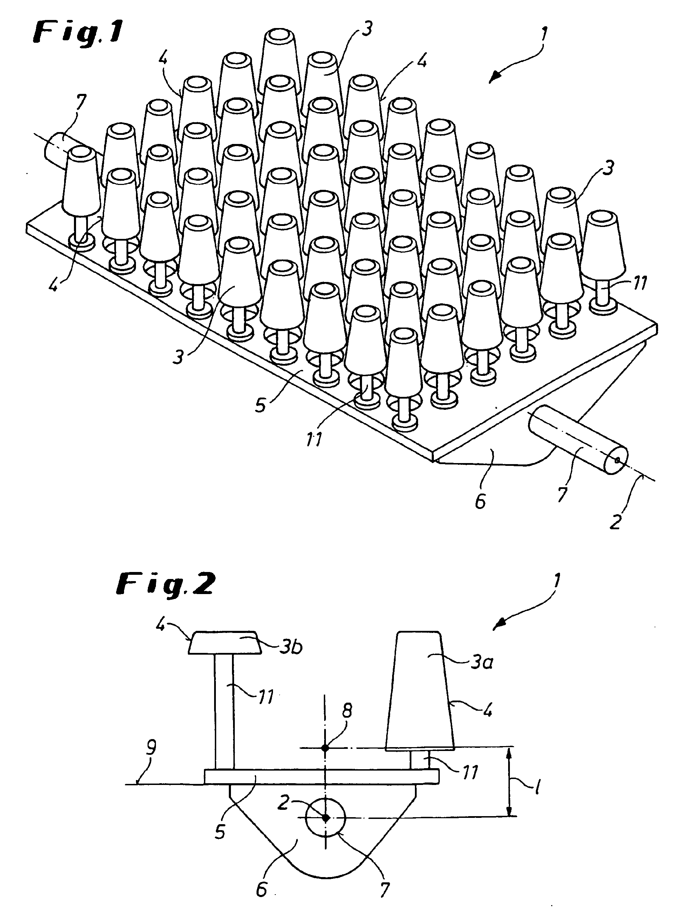

Die zeichnerische Darstellung verzichtet auf die Abbildung einer als solche hinlänglich bekannten Thermoformmaschine und beschränkt sich auf die Vorrichtung zum Stapeln von aus thermoplastischem Kunststoff hergestellten Fertigartikein, d.h. auf die Vorrichtung, die zwischen einem kombinierten Mehrfachform- und Stanzwerkzeug einerseits und einer Stapelstation zur Aufnahme der Fertigartikel andererseits vorgesehen ist, nämlich insbesondere die linearverfahrbare Schwenk-Fangvorrichtung 1, wobei die Figuren 1 und 2 eine Schwenk-Fangvorrichtung 1 in herkömmlicher Bauweise zeigen.

Die Schwenk-Fangvorrichtung 1 erfordert grundsätzlich neben einer linearen Verfahrachse zum Schwenken eine in der Verfahreinheit der Stapelvorrichtung angeordnete Drehachse 2. Die Schwenk-Fangvorrichtung 1 nach Fig. 1 ist mit einer Vielzahl von als Saugkonen 3 ausgebildeten Aufnahmen 4 bzw. Formatteilen versehen, die auf einer Platte 5 angeordnet sind und die aus dem Formwerkzeug ausgeschobenen Teile zum Weitertransport zur Abstapelung aufnehmen.

An der den Aufnahmen 4 entgegengesetzten bzw. abgewandten Seite ist die Platte 5 auf einer halter- bzw. plattenartigen Formatplattenaufnahme 6 der linear verfahrbaren Staplereinheit befestigt, in der Regel damit verschraubt.Mittels Lagerzapfen 7, die die Drehachse 2 definieren, der Formplattenaufnahme 6 ist die Schwenk-Fangvorrichtung 1 verschwenkbar in der verfahrbaren Staplereinheit angeordnet. Wie sich aus Fig. 2 entnehmen lässt, in der als Beispiel für Ausführungen der Aufnahmen 4 ein Saugkonus 3a für hohe Fertigartikel neben einem Saugkonus 3b für flache Fertigartikel dargestellt ist, besitzt die bekannte Schwenk-Fangvorrichtung 1 eine von ihrer Masse und dem Abstand I von der Drehachse 2 zur Hauptträgheitsachse 8 bestimmte, große Massenträgheit.

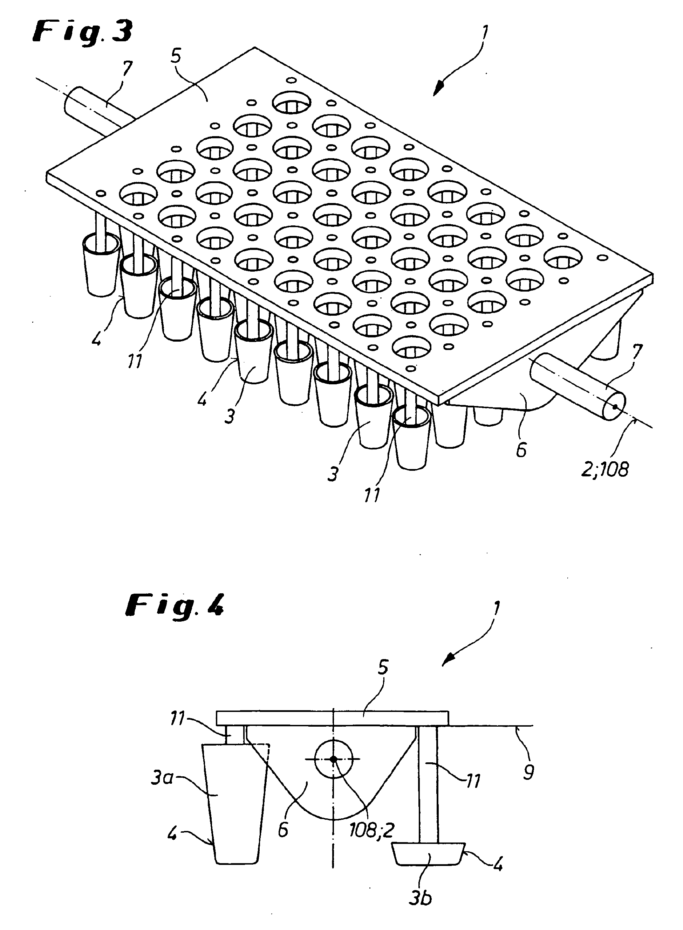

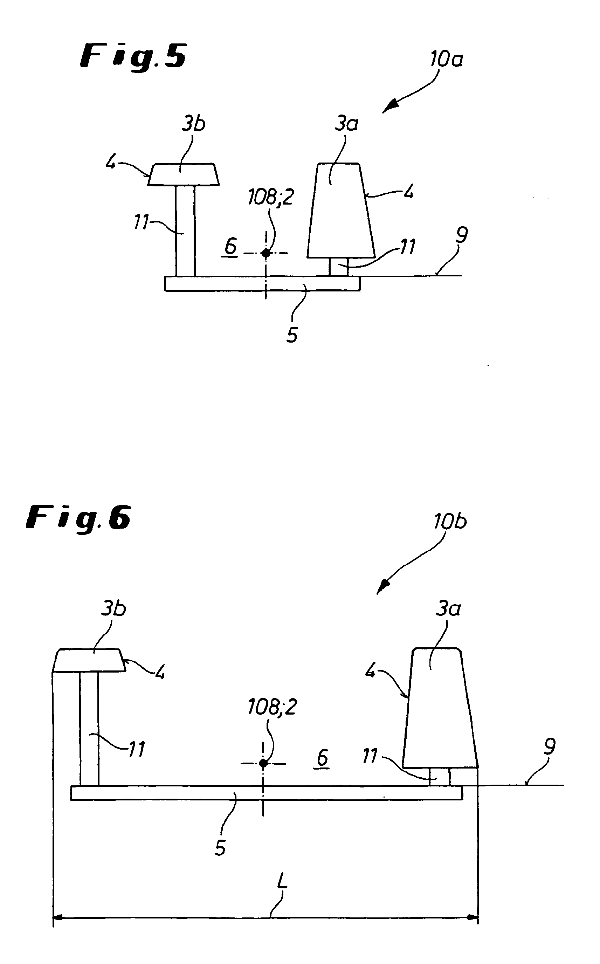

Hiervon weicht die in den Fig. 3 bis 6 dargestellte Ausführung, für die - soweit übereinstimmend - dieselben Bezugsziffern wie anhand der Fig. 1 und 2 beschrieben eingetragen sind, entscheidend dadurch ab, dass die Hauptträgheitsachse 108 auf der die Aufnahmen 4 (Saugkonen 3a oder 3b) aufweisenden Seite der Schwenk-Fangvorrichtung 1 vor einer Befestigungs- bzw. Anschraubebene 9 der an der Formatplattenaufnahme 6 über die produktspezifisch bemessene Platte 5 befestigten Formatplatten 10a, 10b liegend (vgl, die Fig. 5 und 6) und weitestgehend identisch mit der Drehachse 2 zusammenfallend verläuft. Die Trägheit des Systems wird hierdurch auf ein Minimum reduziert.

Die Fig. 5 und 6 zeigen beispielhaft zwei solcher Formatplatten 10a, 10b für Staplervorrichtungen von Thermoformmaschinen unterschiedlicher Größe und Leistung. Jede Formatplatte 10a, 10b besteht aus der an der maschinenzugehörigen Formatplattenaufnahme 6 befestigten produktspezifischen Platte 5 mit darauf angeordneten Konusstangen 11 für entweder Saugkonen 3a für hohe Fertigartikel oder Saugkonen 3b für flache Fertigartikel. Die Konusstangen 11 aller Formatplatten 10a, 10b sind standardisiert lang, d.h. von gleicher Höhe, lediglich die Längen der montierten Saugkonen 3a bzw. 3b unterscheiden sich.

Die in Fig. 6 dargestellte Formatplatte 10b besitzt eine sehr viel größere Formlänge L als in der Ausführung nach Fig. 5 und kommt bei großen, leistungsstarken Thermoformmaschinen zum Einsatz. Ihr Massenträgheitsmoment beträgt mehr als das dreifache der Formatplatte 10a der Fig. 5. Trotzdem können aufgrund der mit der Drehachse 2 nahezu identischen Hauptträgheitsachse 108 ähnlich große Taktzahlen verwirklicht werden, wie sie auf einer leistungsschwächeren Thermoformmaschine mit etwa wie in Fig. 5 dargestellt deutlich kleineren Abmessungen in der herkömmlichen Bauweise (vgl. die Fig. 1 und 2). Erreichbar sind.

Die erreichte geringe Massenträgheit der Schwenk-Fangvorrichtung 1 und die damit schnelleren Schwenkzeiten machen es möglich, die Formatplatten 10a, 10b komplett aus Aluminium herzustellen, wodurch gleichzeitig die Haltbarkeit und Prozesssicherheit verbessert wird.

### Bezugszeichenliste:

- 1: Schwenk-Fangvorrichtung
- 2: Drehachse
- 3: Saugkonus (Formatteil)
- 3a: Saugkonus für hohe Fertigartikel
- 3b: Saugkonus für flache Fertigartikel
- 4: Aufnahme
- 5: Platte (produktspezifisch)
- 6: Formatplattenaufnahme
- 7: Lagerzapfen
- 8: Hauptträgheitsachse
- 9: Befestigungs-/Anschraubebene
- 10a, 10b: Formatplatte
- 11: Konusstange
- 108: Hauptträgheitsachse (erfindungsgemäß)
- I: Abstand (Hebelarm)
- L: Formlänge

## Patentansprüche

1. Vorrichtung zum Stapeln von aus einem Mehrfachwerkzeug einer Thermoformmaschine ausgeschobenen Fertigartikeln aus thermoplastischem Kunststoff, umfassend eine Schwenk-Fangvorrichtung (1) mit der Anzahl der hergestellten Fertigartikel entsprechenden, nur auf einer Seite einer Platte (5) angeordneten Aufnahmen (4; 3) zur Übernahme der ausgeschobenen Fertigartikel und deren Abtransport zu einer der Thermoformmaschine nachgeschalteten Stapelstation, wobei die Schwenk-Fangvorrichtung (1) zwischen dem Mehrfachwerkzeug und der Stapelstation verfahrbar und um eine in einer die Platte (5) mit den Aufnahmen (4; 3) tragenden Formatplattenaufnahme (6) vorgesehene Drehachse (2) schwenkbar ist,
**dadurch gekennzeichnet,**
**dass** die Drehachse (2) auf der die Aufnahmen (4; 3a, 3b) aufweisenden Seite der Schwenk-Fangvorrichtung (1) und weitestgehend identisch mit deren die Aufnahmen (4; 3a, 3b) einbeziehenden Hauptträgheitsachse (108) zusammenfallend ausgebildet ist.

2. Vorrichtung nach Anspruch 1,
**dadurch gekennzeichnet,**
**dass** die Schwenk-Fangvorrichtung (1) mit einer Formatplatte (10a, 10b) ausgebildet ist, die aus einer produktspezifisch bemessenen Platte (5) und auf dieser als Aufnahmen (4) angeordneten Konusstangen (11) mit Saugkonen (3a; 3b) für entweder hohe oder flache Fertigartikel besteht, wobei die Hauptträgheitsachse (108) und damit die Drehachse (2) in Richtung der Artikelabnahmeseite gesehen vor einer Anschraubebene (9) der an einer Formatplattenaufnahme (6) der Schwenk-Fangvorrichtung (1) befestigten Formatplatte (10a, 10b) liegt.

3. Vorrichtung nach Anspruch 1 oder 2,
**dadurch gekennzeichnet,**
**dass** zumindest die Formatplatte (10a, 10b) einschließlich der Aufnahmen (4; 3a, 3b) der Schwenk-Fangvorrichtung komplett aus Aluminium hergestellt ist.

## Claims

1. A device for stacking finished thermoplastic articles ejected from a multi-cavity mould of a thermoforming machine, comprising a swivelling-catching device (1) with a number of receiving elements (4; 3) for taking over the ejected finished articles and transporting them away to a stacking station downstream of thermoforming machines, said receiving elements corresponding to the number of produced finished articles and being disposed only on one side of a plate (5), wherein the swivelling-catching device (1) can be traversed between the multi-cavity mould and the stacking station and can be swivelled about a rotational axis (2) provided in a format plate mounting (6) carrying the plate (5) with the receiving elements (4; 3),
**characterised in that**
the rotational axis (2) is formed on the side of the swivelling-catching device (1) comprising the receiving elements (4; 3a, 3b) and so as to coincide for the most part identically with its main axis of inertia (108) including the receiving elements (4; 3a, 3b).

2. The device according to claim 1,
**characterised in that**
the swivelling-catching device (1) is constituted with a format plate (10a, 10b), which comprises a product-specifically dimensioned plate (5) and cone rods (11) disposed on the latter as receiving elements (4), said cone rods having suction cones (3a; 3b) for either tall or flat finished articles, wherein the main axis of inertia (108) and thus the rotational axis (2), viewed in the direction of the article removal side, lies in front of a screwing plane (9) of the format plate (10a, 10b) fastened to a format plate mounting (6) of the swivelling-catching device (1).

3. The device according to claim 1 or 2,
**characterised in that**
at least the format plate (10a, 10b) including the receiving elements (4; 3a, 3b) of the swivelling-catching device is produced completely from aluminium.

## Revendications

1. Dispositif d'empilage de produits finis en matière thermoplastique expulsés par un moule à cavités multiples d'une machine de thermoformage, comprenant un dispositif d'interception pivotant (1) avec des logements (4 ; 3) correspondant à la quantité des produits finis fabriqués, disposés sur seulement une face d'une plaque (5), pour la reprise des produits finis expulsés et leur évacuation vers un poste d'empilage situé en aval de la machine de thermoformage, le dispositif d'interception pivotant (1) étant déplaçable entre le moule à cavités multiples et le poste d'empilage et étant pivotant autour d'un axe de pivotement (2) prévu dans un logement pour plaques de format (6) portant la plaque (5) avec les logements (4 ; 3),
**caractérisé en ce que** sur la face du dispositif d'interception pivotant (1) comportant les logements (4 ; 3a, 3b), l'axe de rotation (2) est conçu en coïncidence et de façon amplement identique avec l'axe d'inertie principal (108) incluant les logements (4 ; 3a, 3b).

2. Dispositif selon la revendication 1, **caractérisé en ce que** le dispositif d'interception pivotant (1) est conçu avec une plaque de format (10a, 10b) qui consiste dans une plaque (5) dimensionnée de façon spécifique aux produits et dans des barres coniques (11) avec des cônes d'aspiration (3a ; 3b) disposées sur celle-ci en tant que logements (4) pour des produits finis soit hauts ou plats, l'axe d'inertie principal (108) et de ce fait l'axe de rotation (2) se situant en direction du côté de réception des produits, vu à partir d'un plan de vissage (9) de la plaque de format (10a, 10b) fixée sur un logement pour plaques de format (6) du dispositif d'interception pivotant (1).

3. Dispositif selon la revendication 1 ou 2, **caractérisé en ce qu'**au moins la plaque de format (10a, 10b), y compris les logements (4; 3a, 3b) du dispositif d'interception pivotant est entièrement fabriquée en aluminium.
